# EUROPEAN PATENT APPLICATION

(11) **EP 2 299 442 A1**
(43) Date of publication of application: **23.03.2011**
(21) Application number: 09305863.4
(22) Date of filing: 17.09.2009
(51) Int. Cl.: G11B 7/013, G11B 7/24

(54) **Optical storage medium comprising a data layer with an inverted pit/land data structure**

(71) Applicant: Thomson Licensing, 92130 Issy-les-Moulineaux (FR)
(72) Inventor: Pilard, Gael, 78087, Mönchweiler (DE); von Riewel, Larissa, 78050, VS-Villingen (DE)
(74) Representative: Arnold, Klaus-Peter

(57) **Abstract**

The optical storage medium comprises a substrate layer (2), a read-only data layer (3) having a pit/land data structure with data arranged in tracks on the substrate layer (2) and a nonlinear layer (4) with a super-resolution structure disposed on the data layer (3), the super-resolution structure comprising a material providing a destructive interference signal for pits and lands (2T) having a size below the optical resolution limit with regard to pits and lands (4T, 5T) having a size above the optical resolution limit, wherein the data layer (3) comprises an inverted pit/land data structure with pits represented as bumps on the substrate layer (2). The optical storage medium is in particular a read-only optical disc comprising a phase-change material, for example AgInSbTe, for providing the super-resolution effect.

## Description

### TECHNICAL FIELD OF THE INVENTION

The present invention relates to an optical storage medium comprising a substrate layer, a data layer and a nonlinear layer with a super-resolution structure arranged above the data layer. The data layer comprises in particular pits and lands having a size above a optical resolution limit and pits and lands having a size below said optical resolution limit of a pickup for reading of the data as arranged on the data layer.

### BACKGROUND OF THE INVENTION

Optical storage media are media in which data are stored in an optically readable manner, for example by means of a laser and an optical detector, for example a photodetector, being integrated within a pickup. The detector is used for detecting reflected light of the laser beam when reading data on the storage medium. In the meanwhile a large variety of optical storage media are known, which are operated with different laser wavelength, and which have different sizes for providing storage capacities from below one Gigabyte up to 50 Gigabyte (GB). The formats include read-only formats such as Audio CD and Video DVD, write-once optical media such as CD-R and DVD-R, DVD+R, as well as rewritable formats like CD-RW, DVD-RW and DVD+RW. Digital data are stored on these media along tracks in one or more layers of the media.

The storage medium with the highest data capacity is at present the Blu-Ray disc (BD), which allows to store up to about 50 GB on a dual layer disc. For reading and writing of a Blu-Ray disc an optical pickup with a laser wavelength of 405 nm and a numerical aperture of 0,85 is used. On the Blu-Ray disc a track pitch of 320 nm and a mark length from 2T to 8T or 9T is used, where T is the channel bit length and wherein 2T corresponds with a minimum mark length of 138, 149 or 160 nm.

The diffraction limit of optical instruments as described by the Abbe theory is about lambda/2NA, which is 238nm for a Blu-Ray type pickup having a laser wavelength lambda=405nm and a numerical aperture NA=0,85. For the optical resolution limit of a pickup for the readout of the high frequency (HF) data signal of a Blu-Ray disc, a higher resolution can be obtained when the laser beam moves over the pits and lands of a track on the Blu-Ray disc. This theoretical minimal detectable length is corresponding to a period of the pattern function, which is formed of a pit and of a land having the same length. The theoretically smallest detectable element of such a system is therefore a pit or a land having a length of lambda/4NA, so for a Blu-Ray type pickup, having a length of about 120nm.

New optical storage media with a super-resolution structure offer the possibility to increase the data density of the optical storage medium by a factor of two to four in one dimension as compared with the Blu-Ray disc. This is possible by including a nonlinear layer, which is placed above a data layer of the optical storage medium, and which significantly reduces the effective size of a light spot used for reading from or writing to the optical storage medium. The nonlinear layer can be understood as a mask layer because it is arranged above the data layer and for some specific materials only the high intensity center part of a laser beam can penetrate the mask layer. Further, semiconductor materials can be used as a nonlinear layer, e.g. InSb, which show a higher reflectivity in the center part of the focused laser beam, and which center reflectivity is dependent on the pit structure of the corresponding data layer. Therefore, the super-resolution effect allows to record and read data stored in marks of an optical disc, which have a size below the optical resolution limit of lambda/4NA of a corresponding optical pickup.

The nonlinear layer is often called a super-resolution near-field structure (Super-RENS) layer because it is assumed that for some specific materials, the optical effect of reducing the effective spot size of the laser beam is based on a near-field interaction between the marks and spaces of the data layer and the nonlinear layer. Super-RENS optical discs comprising a super resolution near-field structure formed of a metal oxide, a polymer compound or a phase-change layer comprising a GeSbTe or a AgInSbTe are known.

In EP-A-1215665, an optical storage medium is described comprising a read-only data layer having a non-inverse pit/land data structure with concave pits corresponding with holes and an optical storage medium comprising a read-only data layer having an inverse pit/land data structure with convex pits corresponding with bumps on a substrate layer.

### BRIEF SUMMARY OF THE INVENTION

The optical storage medium comprises a substrate layer, a data layer having a pit/land data structure with data arranged in tracks on the substrate layer and a nonlinear layer with a super-resolution structure disposed on the data layer. The super-resolution structure comprises a material providing a destructive interference signal for pits and lands having a size below the optical resolution limit with regard to pits and lands having a size above the optical resolution limit, when using a pit/land data structure with pits represented as holes in the substrate layer of an optical storage medium. To overcome the destructive interference between the pits and lands having a size below the optical resolution limit with regard to the pits and lands having a size above the optical resolution limit, the data layer comprises an inverted pit/land data structure with pits represented as bumps on the substrate layer.

The material of the super-resolution structure is in particular a phase-change material, for example a chalcogenide material like GeSbTe or AgInSbTe, for which a destructive interference takes place between pits and lands having a size below the optical resolution limit with regard pits and lands having a size above the optical resolution limit of a corresponding pickup, when using a data layer with a non-inverted pit/land data structure.

It has been found that for super-resolution storage media comprising a phase-change material as a nonlinear layer, published by G. Pilard, C. Féry, L. Pacearescu, H. Hoelzmann, S. Knappmann, "Study of Super-Resolution ROM Disc with a Semiconducting or a Chalcogenide Masking Layer", Jpn. J. Appl. Phys. 40, (2009), 03A064, that the data signal of the pits and lands having a size below the optical resolution limit of a corresponding pickup is inverted with regard to the data signal resulting from the pits and lands having a size above the optical resolution limit. For example for the material AgInSbTe, the data signal is "high" for lands and "low" for pits, when the pits and lands have a size above the optical resolution limit. This corresponds to a typical behavior of a diffractive signal. But for lands and pits having a size below the optical resolution limit, the data signal is "low" for lands and "high" for pits, which is a surprising effect. The Super-Resolution signal is opposite to the diffractive signal and generates a destructive interference leading to a degradation of the data signal. The pits are represented in this case as holes in the substrate layer. The detection of pits and lands having a size below the resolution limit of a corresponding pickup interferes therefore with the detection of adjacent pits and lands having a size above the resolution limit, which reduces in particular the detectability of the pits having a size below the optical resolution limit.

When using a data layer with an inverted pit/land data structure with pits represented as bumps on the substrate layer, the bumps below the super-resolution limit provide a "low" signal, and the corresponding lands a "high" signal. The pits and lands having a size above the optical resolution limit are not affected by the inverted pit/land data structure. The signals coming from the super-resolution pits and lands therefore provide a data signal being in correspondence with the data signal coming from the pits and lands having a size above the optical resolution limit. With the inverted pit/land data structure, the bit error rate for the data signal of a super-resolution optical storage medium comprising a phase-change material as the super-resolution structure can be essentially reduced.

The optical storage medium is in particular a ROM disc, comprising pits and lands as marks and spaces, the pits represented as bumps being provided on the surface of the substrate layer by using a respective stamper.

### BRIEF DESCRIPTION OF THE DRAWINGS

Preferred embodiments of the invention are explained in more detail below by way of example with reference to schematic drawings, which show:
- Fig. 1: an optical storage medium in a sectional view with a layer stack comprising a substrate, a data layer and a nonlinear layer,
- Fig. 2: spectral distributions of HF data signals of super-resolution discs comprising an AgInSbTe layer, respectively an InSb layer,
- Fig. 3: signal amplitudes of an AgInSbTe and an InSb super-resolution disc comprising a sequence of 20 2T pits, followed each by a 2T land,
- Fig. 4: a calculated HF signal for a random sequence of pits and lands of a super-resolution disc comprising an InSb layer,
- Fig. 5: a calculated HF signal for a random sequence of pits and lands of a super-resolution disc comprising an AgInSbTe layer, and
- Fig. 6: simulation results for 2T pits and lands of a super-resolution disc comprising an AgInSbTe nonlinear layer, wherein the data layer comprises an inverted pit/land data structure with pits represented as bumps on the substrate layer.

### DETAILED DESCRIPTION OF PREFERRED EMBODIMENTS

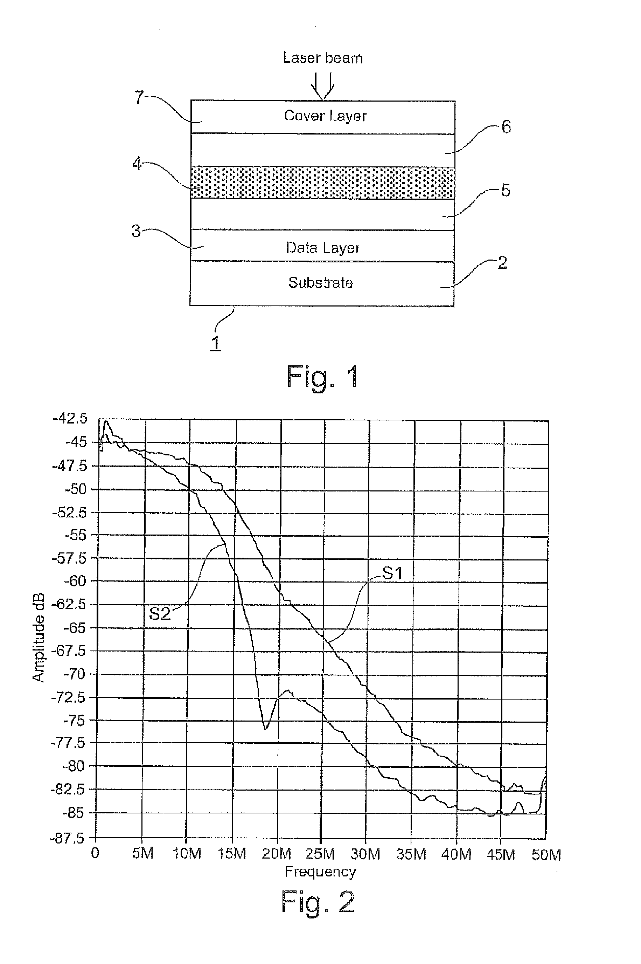

In Fig. 1 an optical storage medium 1 is shown in a cross section in a simplified manner. The optical storage medium 1 is in particular a read-only (ROM) optical storage disc. On a substrate 2 a data layer 3 is arranged which may comprise a reflective metallic layer, for example an aluminum layer. The data layer 3 has a data structure consisting of marks and spaces arranged on essentially parallel tracks. For a ROM disc, the marks and spaces consist of pits and lands, the pits being molded or embossed on the surface of substrate 2 for representing the data layer 3. On the data layer 3 a first dielectric layer 5 is arranged and on the dielectric layer 5 a nonlinear layer 4 is arranged for providing the function of a mask layer for utilizing a super-resolution effect. The nonlinear layer 4 comprises in particular a super-resolution structure for providing the super-resolution effect, e.g. a super-resolution near-field structure (Super-RENS).

Above the nonlinear layer 4 a second dielectric layer 6 is disposed. As a further layer, a cover layer 7 is disposed on the second dielectric layer 5 as a protective layer. For reading the data of the data layer 3, a laser beam is applied in this embodiment from the top of the storage medium 1, penetrating first the cover layer 7. The optical storage medium 1 is in particular an optical disc having outside dimensions similar to DVDs and CDs. The first and second dielectric layers 5, 6 comprise for example the material ZnS-SiO₂. The substrate 2 and the cover layer 7 may consist of a plastic material, as known from DVDs and CDs. The layers of the storage medium 1 are arranged particularly as a layer stack.

The super-resolution effect allows detecting pits, which have a size, in particular a length, which is below the optical resolution limit of a corresponding apparatus for reading of the data of the optical storage medium. It has been demonstrated that the super-resolution detection of an optical disc comprising a phase-change material, also other materials like semiconductor materials, is related to a local change of the optical properties of the nonlinear layer 4. For phase-change materials, for example AgInSbTe, it is assumed that the temperature increase due to the focussed laser spot is responsible for the super-resolution effect, which provides an aperture only in a small center of the laser spot. This is a priori due to a low thermal conductivity and a strong optical nonlinearity of the material.

This effect is also assumed for other chalcogenide materials, which comprise a chalcogenide element like sulphur, selenium, tellurium and one or several more electropositive elements like arsenic, germanium, phosphor or antimony. The chalcogenide materials are glasslike materials which show two stable phases, an amorphous and a crystalline phase. By heating a chalcogenide material with a high intensity laser beam, a phase transition from the crystalline to the amorphous phase is provided. For a super-resolution optical disc comprising a chalcogenide material, the intensity of the laser beam of a corresponding optical pickup is adjusted such, that only for a small center part of the laser spot on the storage medium a phase transition is provided for providing an "aperture type" super-resolution effect.

Also super-resolution discs comprising a semiconductor material as a super-resolution structure have been investigated, and in particular for III-V semiconductors having a low activation threshold, for example InSb, good results could be obtained. For the semiconductor materials, it is assumed that the high light intensity of a corresponding laser beam shifts electrons from the valence band to the conduction band, which increases the reflectivity of the semiconductor material. The change in reflectivity is dependent whether a pit or a land of the data layer is present in the near-field of the nonlinear layer.

With ROM discs comprising an alternating pattern of 80 nm pits and lands on the data layer, a carrier to noise ratio of about 40 db can be obtained for InSb as well as for AgInSbTe as the super-resolution structure, when a sufficiently high laser power is provided for triggering the super-resolution effect. Tests were made also with random pit/land patterns, for which a bit error rate of about 1.10⁻⁴ was obtained for the semi-conductor based InSb disc. But it was impossible to decode the data pattern on the phase-change based AgInSbTe disc.

When investigating the spectral distribution of high frequency (HF) data signals corresponding to random data patterns of super-resolution discs, a surprising effect was revealed for the discs with the AgInSbTe material, as shown in Fig. 2. Signal S1 is a spectral distribution of the HF signal of an InSb super-resolution disc, which shows a smooth decay for frequencies above 10 MHz. But for the disc with the AgInSbTe phase-change material, signal S2, a dip occurs at about 18 MHz, which frequency corresponds essentially with the optical resolution limit of the pickup. Also, at the frequency of 30,7 MHz, which corresponds with the HF signal of the 2T pits having a length of 80nm, the amplitude of signal S2 is about 7,5 db below the amplitude of signal S1. It seems therefore that for the AgInSbTe disc, an interference occurs between the detection of pits and lands having a size above the optical resolution limit and of pits and lands having a size below the optical resolution limit of the pickup, which reduces the detectability of the pits having a size below the optical resolution limit.

For obtaining the signals S1 and S2, super-resolution discs were used with a random data pattern with pits and lands based on a channel bit length of 40 nm. Also, the bit error rate was measured for the discs. For the semiconductor based disc, a bit error rate as low as 1.10-4 was obtained while no decoding was possible for the disc with the AgInSbTe phase-change material. Otherwise, the disc with the AgInSbTe material showed a high carrier-to-noise ratio.

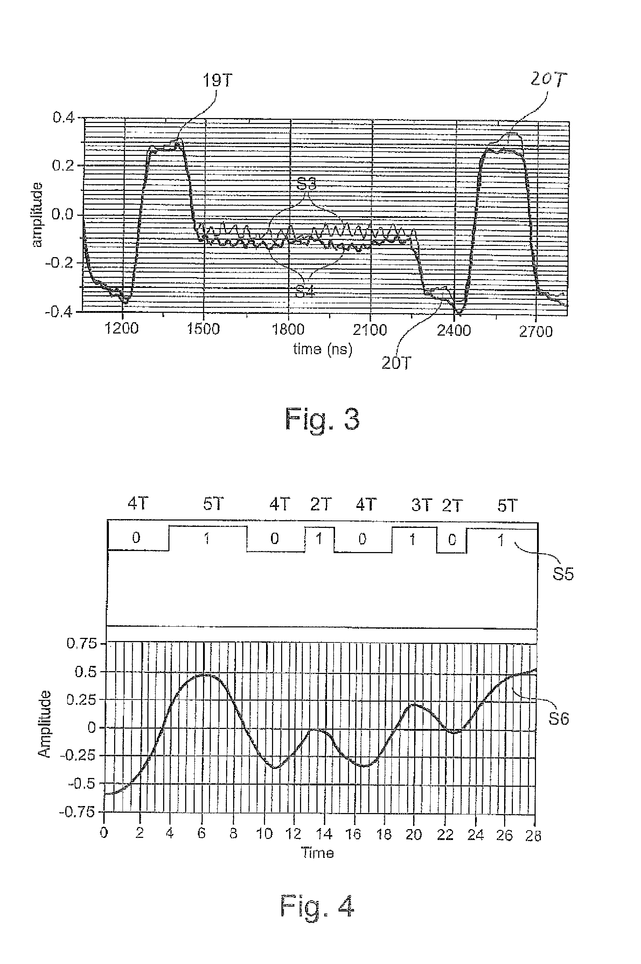

To study this effect in more detail, super-resolution discs comprising a sequence of 20 pits with length of 2T=100nm, separated each by a 2T land, the 2T pits and lands being arranged between a 19T land and a 20T pit followed by a 20T land, were manufactured for both materials InSb and AgInSbTe. The results are shown in Fig. 3. As expected, for the pits and lands having a size above the optical resolution limit, the signal amplitude is much larger than for the pits and lands below the optical resolution limit. The twenty 2T lands of the InSb disc show a higher reflectivity with regard to the 2T pits, signal S3, corresponding with the higher reflectivity of the 19T and 20T lands. The twenty 2T pits between the 19T land and the 20T pit are clearly resolved.

But the twenty 2T pits of the AIST disc, signal S4, show a worse behaviour: The two 19T and 20T lands show also a higher reflectivity, but the twenty 2T lands of the AgInSbTe disc show a lower reflectivity with regard to the 2T pits, in contrast with the 2T lands of the InSb disc, signal S3. Because of the inverted signal S4 of the 2T pits and lands, for the AgInSbTe disc only nineteen 2T pits can be resolved. Therefore, when a random sequence with data is provided, having pits below the optical resolution limit and pits above the optical resolution limit, the data cannot be decoded correctly for an AgInSbTe disc.

To explain this behaviour, numerical simulations have been performed for aperture type super-resolution discs, i.e. AgInSbTe, with the result that the reflectivity increases for pits and decreases for lands when the pits and lands have a size below the optical resolution limit, and decreases for pits and increases for lands when they have a size above the optical resolution limit. When the pits have a size about the optical resolution limit, there is a competition between the diffractive readout responsible for the detection of the larger pits and the super-resolution mechanism responsible for the detection of the pits below the optical resolution limit. Therefore, the resulting signals of the 2T pits of the AgInSbTe super-resolution disc are inverted with regard to 20T pits, as can be seen in Fig. 3.

With regard to the super-resolution disc comprising an InSb layer, the results for the 2T pits are consistent with the diffractive readout of the pits having a size above the optical resolution limit. The reflectivity is increased for lands and an decreased for pits, independently whether they have a size below or above the optical resolution limit, in agreement with the measurement of Fig. 3.

In Fig. 4, a calculated HF signal S6 is shown for a random sequence of pits and lands, graph S5, for a super-resolution disc comprising an InSb mask layer. The pits and lands of the graph S6 have a size from 2T to 5T as indicated, lands represented by a logical "1" and pits represented by "0". The simulation result, graph S6, shows a lower reflection amplitude for the pits having a size above and below the optical resolution limit, and show a higher reflection for lands of all sizes. Therefore, all pits can be clearly resolved and consequently detected by a pickup, when reading the data of the graph S5 arranged on a track of an InSb super-resolution disc.

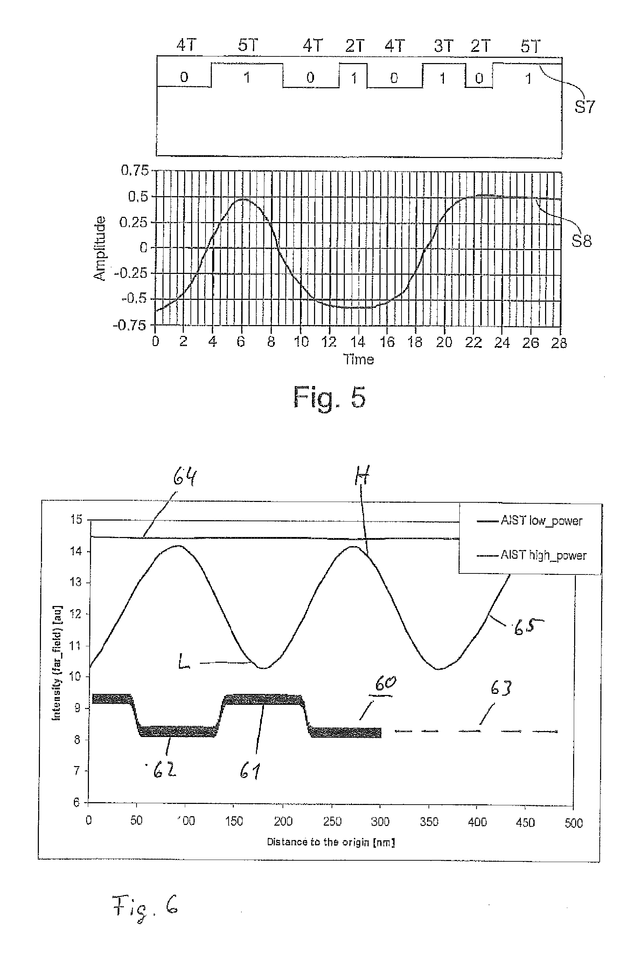

The situation for a super-resolution disc comprising an AgInSbTe mask layer as the super-resolution layer is shown in Fig. 5: The graph S7 corresponds with the same pit and land sequence of graph S5 of Fig. 4 and the signal S8 shows the respective calculated HF signal for the AgInSbTe disc. The 5T and 3T lands have a higher amplitude corresponding with a higher reflectivity and the 4T pits have a lower amplitude corresponding with a lower reflectivity. But the 2T land shows a lower reflectivity and the 2T pit shows a higher reflectivity, due to the inversion of the signal for pits and lands having a size below the optical resolution limit, as described above, and therefore, they cannot be decoded because their signal is included in the adjacent larger pits and lands. Correspondingly, the 2T pits and 2T lands of the data stream S7 cannot be resolved when arranged on an AgInSbTe super-resolution disc.

To overcome this problem for an optical storage medium having a nonlinear layer with a super-resolution structure, which comprises a material providing an inverted data signal for pits and lands having a size below the optical resolution limit with regard to the data signal for pits and lands having a size above the optical resolution limit, as described before, the data layer comprises an inverted pit/land data structure with pits represented as bumps on the data layer.

For pits and lands having a size above the optical resolution limit, the data signal is independent on the data structure, whether the data structure has a non-inverted pit/land data structure with pits represented as holes in the data layer, or whether it has an inverted pit/land data structure with pits represented as bumps on the data layer. But for the pits and lands having a size below the optical resolution limit, the data signal is inverted for an inverted pit/land data structure, with regard to the non-inverted pit/land data structure. The data signal for the super-resolution pits depends on the pit/land data structure, because the super resolution effect is located on the first encountered surface of the data layer.

The optical resolution limit of a pickup for reading data of the optical storage medium can be defined as lambda/4NA, wherein lambda is the laser wavelength of the pickup and NA the numerical aperture of the pickup. The pits and lands of the optical storage medium having a size below the optical resolution limit are in particular 2T and 3T pits and lands, or 2T pits and lands, depending on the data density of the optical storage medium, wherein T is the channel bit length.

For phase-change materials, in particular chalcogenide materials, for example GeSbTe or AgInSbTe, the data signal for pits and lands having a size below the optical resolution limit is inverted with regard to pits and lands having a size above the optical resolution limit, when using a non-inverted pit/land data structure. The pits having a size below the optical resolution limit provide a "low" signal, when represented as holes in a non-inverted pit/land data structure, but pits having a size below the optical resolution limit provide a "high" signal, when represented as bumps in an inverted pit/land data structure.

In figure 6 results are shown of a simulation applied to an optical storage medium comprising a phase-change material as the super-resolution structure, which has a track 60 with an inverted pit/land data structure with 2T pits 61 and 2T lands 62, the pits 61 being represented as bumps with regard to a reference plane 63, which is in this embodiment the plane of the substrate layer. A substrate layer with a data layer of this kind can be manufactured e.g. by using a stamper, which comprises a data structure with tracks, in which the 2T pits are arranged as holes in the stamper, as well known in prior art.

The simulation shows, that the reflected light intensity 64 is high, when a low laser power is used for reading the data of the track 60, which is not sufficient for providing the super-resolution effect. But when using a sufficiently high laser power for triggering the super-resolution effect of the phase-change material, the pits 61 and the lands 62 can be resolved, because the pits 61 provide a "low" signal L and the lands 62 a "high" signal H.

Because the pits having a size above the optical resolution limit provide also a "low" signal and the lands having a size above the optical resolution limit provide a "high" signal for the phase-change material, no destructive interference occurs, as explained with regard to figure 2, because the data signal of the 2T pits and lands 61, 62 have a similar intensity modulation as the pits and lands having a size above the optical resolution limit.

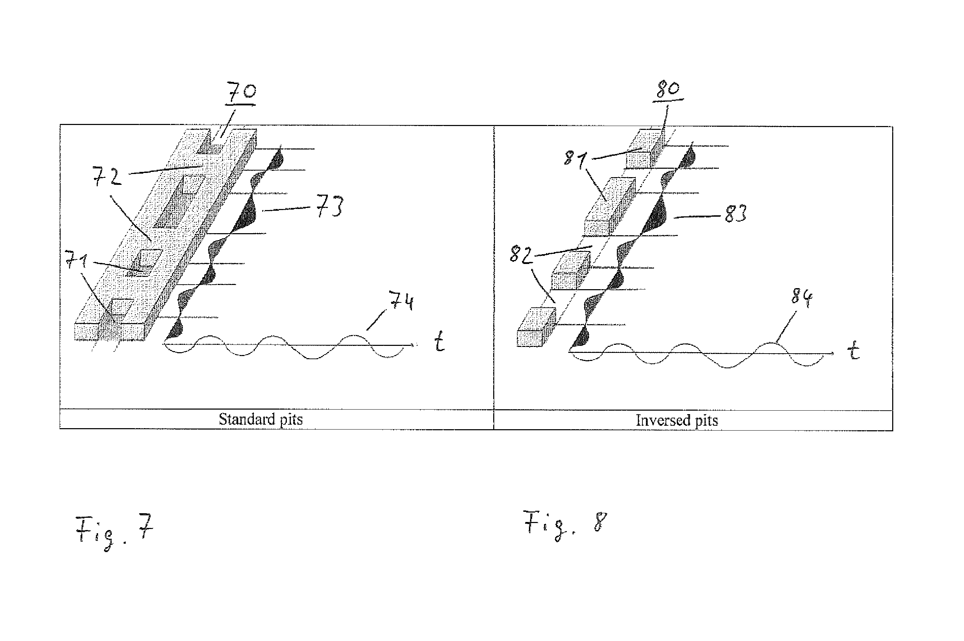

For present read only optical storage media, e.g. DVD ROM and CD, the reflected light has a lower intensity for the pits and a higher intensity for the lands, as shown in Fig. 7. When a laser beam of a pickup reads the data of a track 70 comprising pits 71 and lands 72, the reflected light is intensity modulated in time t because the reflected light from the pits 71 is reduced due to interference effects, as shown in graph 73. The depth of the pits 71 is in particular selected such, that a destructive interference between the reflected light from the pits 71 with the reflected light of the surrounding land area is optimized. The intensity modulation of the reflected light, graph 73, is converted in the pickup by a photo-detector into an electrical data signal, also called HF-signal 74.

When a standard read-only optical disc comprises an inverted pit/land data structure with pits represented as bumps, as shown in Fig. 8, the reflected light intensity originating from the bumps is lower, in correspondence with the optical storage medium shown in Fig. 7. Bumps 81 being arranged on a substrate layer provide a lower reflected intensity with regard to lands 82 of a track 80, in correspondence with the pits 71, Fig. 7. This is based on the same interference effect, because due to the height of the bumps 81 with regard to the surrounding substrate layer, a phase shift is provided between the reflected light of the bumps 81 and the reflected light of the substrate layer such, that a destructive interference occurs. The intensity distribution 83 for the track 80 leads therefore to a data signal 84, which is essentially the same as the data signal 74 of Fig. 7.

Therefore, when using a data layer 3 comprising an inverted pit/land data structure with pits represented as bumps on the substrate layer for an optical storage medium comprising a nonlinear layer 4 with a super-resolution structure being a phase-change material, the signals coming from the super-resolution pits and lands provide a data signal being in correspondence with the data signal coming from the pits and lands having a size above the optical resolution limit. With the inverted pit/land data structure, decoding of the super-resolution pits and lands is possible and the bit error rate of the data signal of a super-resolution optical storage medium can be essentially reduced.

In a further aspect of the invention, the optical storage medium comprises in addition a substrate layer, a read-only data layer having a pit/land data structure with data arranged in tracks on the substrate layer, a nonlinear layer with a super-resolution structure disposed on the data layer. A first dielectric layer is arranged advantageously between the nonlinear layer and the data layer and a second dielectric layer is arranged between the nonlinear layer and the cover layer. The optical storage medium may comprise in addition a reflective layer arranged on the substrate layer, between the first dielectric layer and the substrate layer.

Also other embodiments of the invention may be utilized by a person skilled in the art without departing from the spirit and scope of the present invention. The invention resides therefore in the claims herein after appended.

## Claims

1. Optical storage medium comprising
a substrate layer (2),
a read-only data layer (3) having a pit/land data structure with data arranged in tracks on the substrate layer (2), and
a nonlinear layer (4) with a super-resolution structure disposed on the data layer (3),
**characterized in that**
the super-resolution structure comprises a material providing a destructive interference signal for pits and lands (2T) having a size below the optical resolution limit with regard to pits and lands (4T, 5T) having a size above the optical resolution limit, when using a pit/land data structure with pits represented as holes in the substrate layer, and
the data layer (3) comprises an inverted pit/land data structure with pits represented as bumps on the substrate layer (2).

2. Optical storage medium according to claim 1, **wherein** the material is a phase-change material, for example a chalcogenide material.

3. Optical storage medium according to claim 1 or 2,
**wherein** the data layer comprises tracks with pits and lands (4T, 5T) having a size above a optical resolution limit of a pickup for reading of the data and pits and lands (2T) having a size below the optical resolution limit, and wherein the pits (4T, 5T) having a size above the optical resolution limit provide a "low" signal when irradiated with a laser beam, and pits (2T) having a size below the optical resolution limit provide also a "low" signal when irradiated with a laser beam.

4. Optical storage medium according to one of the preceding claims, **wherein** the pits and lands of a track having a size below the optical resolution limit are 2T and/or 3T pits and lands, wherein T in a channel bit length.

5. Optical storage medium according to one of the preceding claims, **wherein** the optical resolution limit of a pickup for reading of the data is defined as lambda/4NA, lambda being a laser wavelength and NA a numerical aperture of the pickup.

6. Optical storage medium according to one of the preceding claims, **comprising** a cover layer (7) above the nonlinear layer (4), the storage medium being designed for operation with a laser beam penetrating first the cover layer (7).

7. Optical storage medium according to claim 6, **comprising** a first dielectric layer (5) arranged between the nonlinear layer (4) and the data layer (3) and a second dielectric layer (6) arranged between the nonlinear layer (4) and the cover layer (7).

8. Optical storage medium according to one of the preceding claims, **wherein** the nonlinear layer (4) has the function of a mask layer for the data layer (3).
